(19) Europäisches Patentamt

European Patent Office

Office européen des brevets

(11) Veröffentlichungsnummer: **0 255 103**
**A2**

(12) # EUROPÄISCHE PATENTANMELDUNG

(21) Anmeldenummer: 87110896.5

(22) Anmeldetag: 28.07.87

(51) Int. Cl.³: **C 05 F 9/02**

(30) Priorität: 29.07.86 DE 3625546

(43) Veröffentlichungstag der Anmeldung:
03.02.88 Patentblatt 88/5

(84) Benannte Vertragsstaaten:
AT BE CH DE ES FR GB IT LI NL SE

(71) Anmelder: Willibald, Josef
Frickinger Strasse 97
D-7771 Frickinger 2/Altheim(DE)

(72) Erfinder: Willibald, Josef
Frickinger Strasse 97
D-7771 Frickinger 2/Altheim(DE)

(74) Vertreter: Seemann, Norbert W.
Brehmstrasse 37
D-7320 Göppingen(DE)

(54) Gerätekombination zum maschinellen Aufbereiten organischer Materialen zum Zwecke der Kompostierung.

(57) Eine Gerätekombination zum maschinellen Aufbereiten organischer Materialien wie z.B. Astholz, Gebüsch, Strauchwerk o.ä. Stoffen vornehmlich zum Zwecke der anschließenden Kompostierung und Erzeugung von Feinkomposterde besteht aus einem Häcksler ( 5,6 ) mit Beschickungsdrehkran ( 16 ) und separat zugeordnetem Kompostumsetzgerät ( 20 ). Alle Geräteteile sind dabei auf einem gemeinsamen mit Laufrädern ( 23 ) und/oder Zug- bzw. Anhängedeichsel ( 31 ) versehenen, Grundrahmen ( 1 ) aufsetzbar.

EP 0 255 103 A2

./...

Fig. 4

European Patent Attorney

Dipl.- Ing. **NORBERT W. SEEMANN**

Patent- und Zivilingenieur
Mandataire en brevets Européens

**0255103**

Patentbüro:

Brehmstraße 37
D-7320 Göppingen

Tel. 07161-71166

Telegramme:
„Seepatent"

23. Juli 1987
EP (PG) 8610 W Se/bs

- 1 -

## Gerätekombination zum maschinellen Aufbereiten organischer Materialien zum Zwecke der Kompostierung

Die vorliegende Erfindung bezieht sich auf eine Vorrichtung nach dem Oberbegriff des Hauptanspruchs, also auf eine Gerätekombination zum maschinellen Aufbereiten organischer Materialien wie z. B. Astholz, Gebüsch, Strauchwerk o.ä. Stoffen vornehmlich zum Zwecke der anschließenden Kompostierung und Erzeugung von Feinkomposterde.

Als Stand der Technik wird dabei von der DE-OS 34 43 946 des gleichen Anmelders ausgegangen, in der bereits ein Gerät zum gleichzeitigen Umsetzen, Absieben und Nachzerkleinern von in Mieten oder ähnlichen Anhäufungen gelager-

Kreissparkasse Göppingen (BLZ 61050000) Konto 474595     Postscheckkonto Stuttgart (BLZ

tem, anderweitig vorzerkleinerten Materials beschrieben wird. Neben stirnseitigem Abtragen der Kompostmieten ganz oder in Teilsträngen mittels Fräsvorrichtung und Aufgeben des Gutes auf eine Siebeinrichtung sieht dieses bekannte Gerät bereits vor, daß zudem eine Absiebung der fertigen Feinerde mit Nachzerkleinerung des Grobmaterials und Ablage bzw. Mischung des daraus anfallenden Häckselgutes mit der Feinerde stattfindet. Obwohl ein soches Gerät hervorragend arbeitet, hat sich jedoch im kommenden und sonstigem, vor allem gewerblichen Betrieb gezeigt, daß ein Kombinationsgerät noch günstiger und rationeller wäre, das neben der Kompostumsetzung zunächst auch einmal das Heranschaffen und Zerkleinern des zu kompostierenden Ast- bzw. Strauchwerks o.dgl. bewerkstelligen könnte. Ein solches Gerät zu schaffen ist deshalb auch die Aufgabe der vorliegenden Erfindung.

Gelöst wird diese Aufgabe durch die Gesamtheit der in den Patentansprüchen angegebenen baulichen sowie anordnungstechnischen Mittel und Maßnahmen die in den Zeichnungen in einem Ausführungsbeispiel dargestellt und anschließend im Detail noch näher beschrieben sind.

Es zeigen:

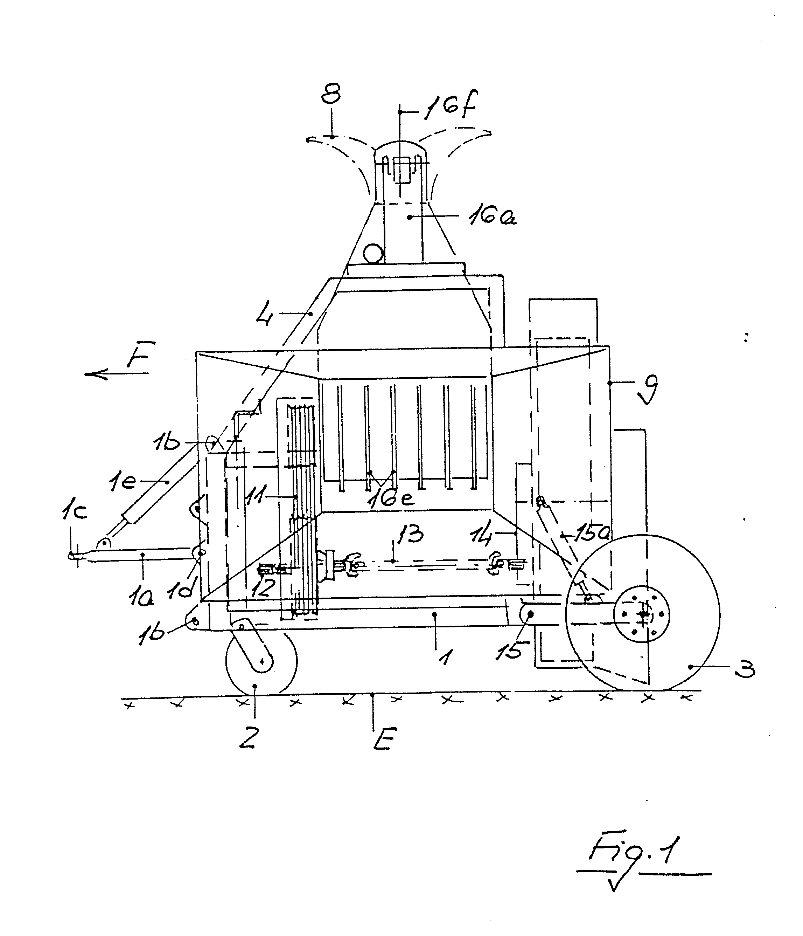

Fig. 1    die erfindungsgemäße Gerätekombination in Seitenansicht,

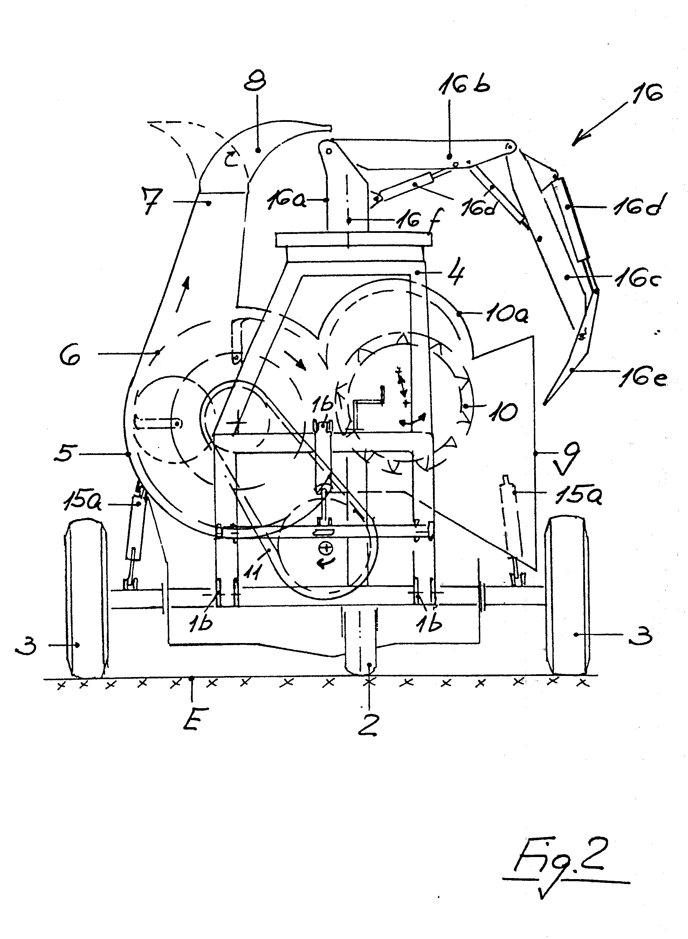

Fig. 2    desgleichen von vorn betrachtet,

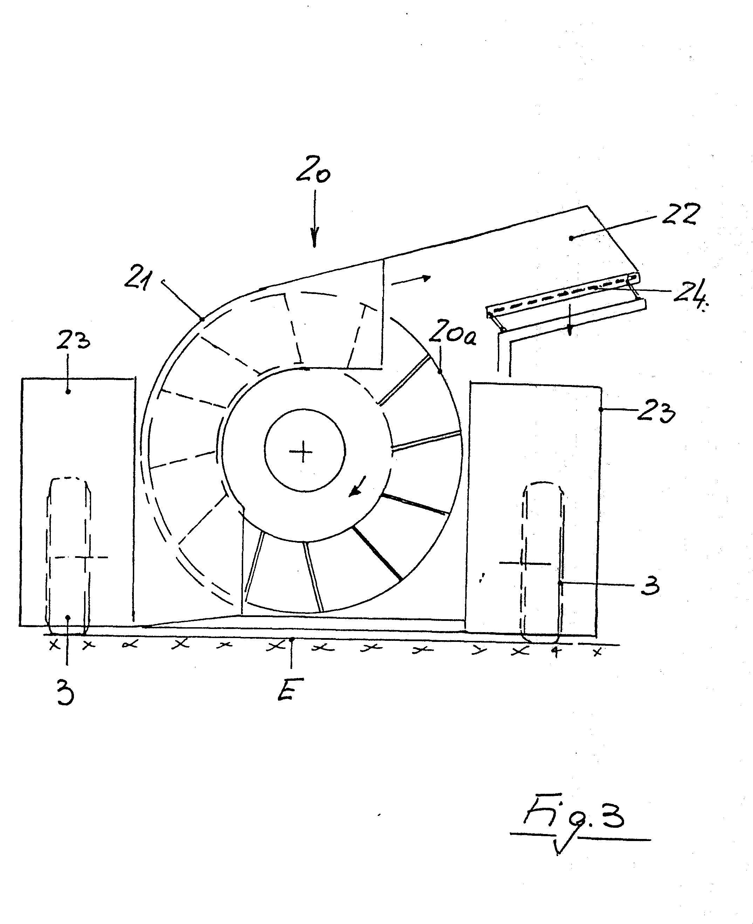

Fig. 3    desgleichen von hinten gesehen,

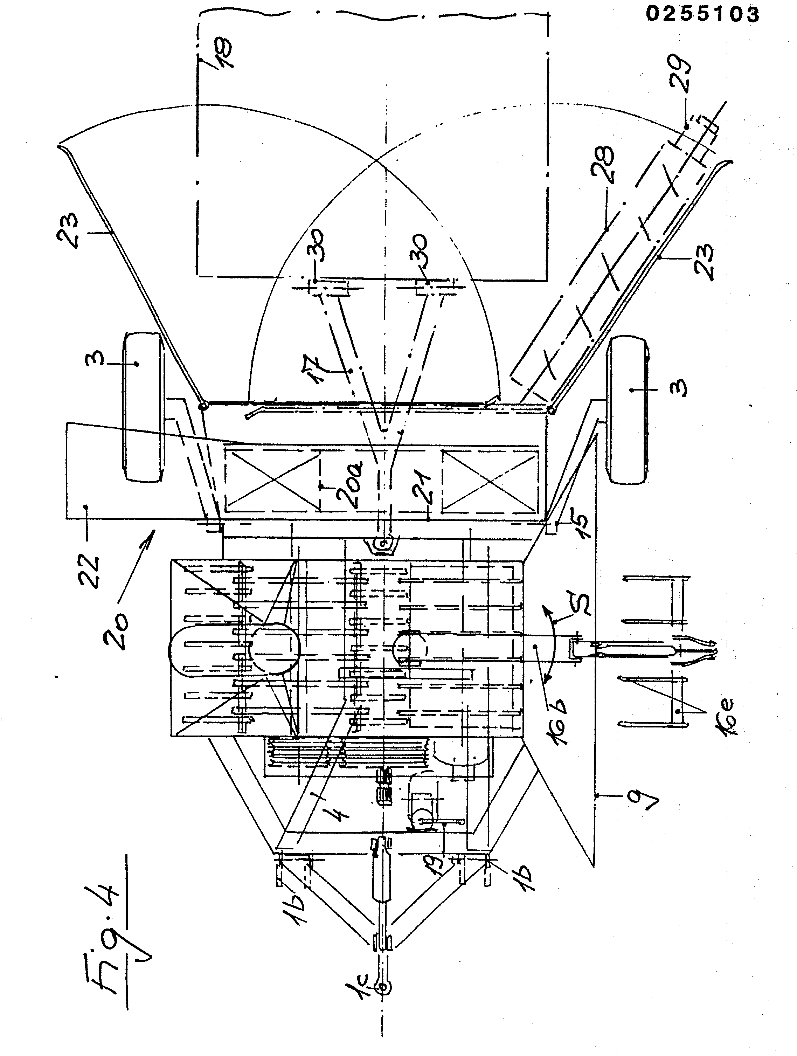

Fig. 4    eine Draufsicht zu Fig. 1 und

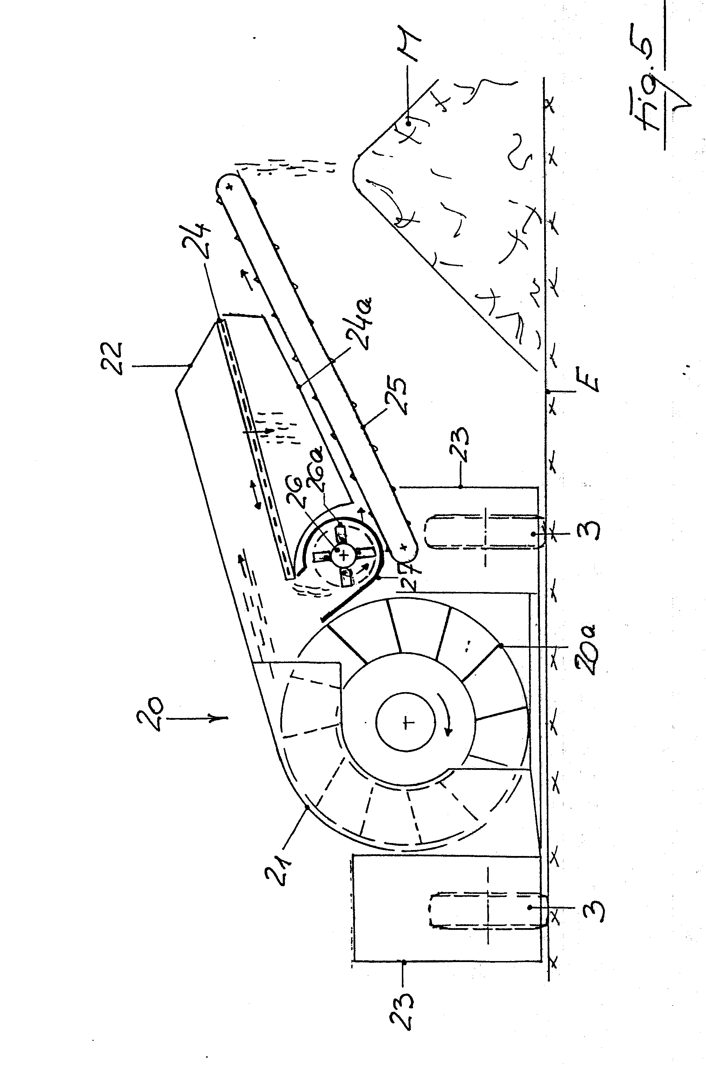

Fig. 5    eine Variante zu Fig. 3.

Die in Fig. dargestellte Gerätekombination zum maschinellen Aufbereiten organischer Materialien wie z.B. Astholz, Gebüsch, Strauchwerk o.ä. Stoffen vornehmlich zum Zwecke der anschließenden Kompostierung und Erzeugung von Feinkomposterde, zeichnet sich in ihrem maschinellen Grundaufbau vor allem aus durch ein im Anhänge- oder anderen Verbundbetrieb mit einem Schlepper o.ä.,Motorfahrzeug verfahrbares Zerkleinerungsgerät 5, 6 für das Rohmaterial mit zugeordneter, verstell- bzw. steuerbarer Beschickungsvorrichtung 16 und Zusatzelementen 17, 30 zum wahlweisen Ankuppeln bzw. Aufsatteln eines Sammelcontainers 18 für das Häckselgut und/oder eines Umsetzgerätes 20 zum Weiterbehandeln bereits in Mieten "M" gelagerten Kompostmaterials.

Das Umsetzgerät ähnelt dabei in seiner baulichen Ausgestaltung dem Gegenstand der DE-OS 34 43 946 des gleichen Anmelders, und wird später noch näher in seiner speziellen Zuordnung zum Gesamtsystem beschrieben.

Bei dem Grundgerät dieser Kombination, also dem Geräteteil, das ausschließlich der Gutaufnahme und Zerkleinerung dient, ist als neu nun vorgesehen, daß die Arbeitswellen den höhenbeweglich am Häckselgehäuse 5 gelagerten Dosier- bzw. Einzugswalze 10 und des Häckselrotors 6 in Längs- bzw. Fahrtrichtung "F" des mit Laufrädern 2, 3 versehenen Grundrahmens 1 liegen, die Beschickungsvorrichtung als Drehkran 16 mit über hydraulische Zylinder-Kolbeneinheiten 16d, verstellbaren Greiferarmen 16b, 16c und einendiger Greiferzange bzw. zinkenbesetzter Gabel 16e ausgebildet und über eine Säule 16a o.dgl. auf dem Gestellaufbau 4 befestigt ist.

Weiterhin ist speziell hierfür vorgesehen, daß den Gehäusen 5 bzw. 10a von Häckselrotor 6 und Einzugswalze 10 ein quer zur Fahrtrichtung "F" sowie im Schwenk- bzw. Arbeitsbereich "S" der Beschickungsvorrichtung 16 liegender, vorzugsweise trichterförmiger Zufuhrkanal 9 an einer der Gerätelängsseiten zugeordnet ist, durch den dann das zu zerkleinernde Gut von der Beschickungsvorrichtung den umlaufenden Walzen ( 10, 6 ) zugeführt wird, wobei dem Häckselgehäuse 5 in an sich bekannter Weise ein Auswurfkanal 7 mit an seinem freien Ende verstellbaren Leitblech 8 zugeordnet und der Grundrahmen 1 zusätzlich mit einer Anbaukupplung 17, 30 für einen Sammelcontainer bzw. ein ähnliches Fahrzeug 18 versehen ist.

Erfindungserheblich zur Vervollkommnung im Sinne der Aufgabenstellung der vorliegenden Neukonstruktion ist nun die Zuordnung eines Kompostumsetzers 20 für in Mieten "M" gelagertes, bereits vorzerkleinertes Material in anhäng- oder über Schnellverschlüsse aufsattelbarer Ausführung zum Grundrahmen 1, wobei der Umsetzer 20 in an sich bekannter Weise aus einem stirnseitig in Arbeitsrichtung "F" liegenden Fräs- oder Schleuderrad 20a mit seitlichen Leitblechen 23 besteht, das von einem Gehäuse 21 radial teilweise umgeben ist und an welches 21 ein quer zur Fahrtrichtung "F" liegender Auswurfkanal 22 anschließt.

Darüberhinaus ist vorgesehen, daß sich unterhalb des Auswurfkanals 22 eine schwingende o.ä. bewegte Absiebeinrichtung 24 anschließt mit seitlichen Leitblechen 24a zu einem Austragförderer 25 und Rückführung groben Materials zu einem in einem Siebkäfig 27 o.dgl. laufenden Nachzerkleinerer 26 mit rotierenden Arbeitswerkzeugen 26a.

Alternativ hierzu denkbar wäre auch, daß durch Einbau entsprechender Leitkanäle der Häcksler 5, 6 selbst als Nachzerkleinerer für das beim Umsetzvorgang anfallende Grobgut schaltbar ist.

Der Antrieb aller rotierenden Elemente ist dabei vorteilhafterweise so ausgelegt, daß der Häckselrotor 6 des Grundgerätes und das Fräs- bzw. Schleuderrad 20a des Kompostumsetzers 20 von einem gemeinsamen Eingangsgetriebe 11 mit Zapfwellenanschluß 12 aus über einen Gelenkwellendurchtrieb 13 zum Schleuderradgetriebe 14 hin, antriebsseitig miteinander gekoppelt bzw. koppelbar sind.

Eine Verbesserung der Einzugsfunktion des in Mieten gelagerten Materials zum Schleuderrad 20a des Umsetzers 20 kann zudem noch erreicht werden durch Zuordnung einer Förderschnecke 28 an mindestens einem der seitlichen Leitbleche 23 des Umsetzgerätes 20, wobei diese Förderschnecke 28 einen separaten Antrieb 29 ( z.B. Ölmotor ) aufweist und beim Transport nach innen einschwenkbar ist. Durch ein Knickgelenk 15 mit Stellzylinder 15a im Grundrahmen 1 zwischen Häcksler 5, 6 und Umsetzgerät kann letztlich u.a. noch ein unmittelbares Aufsatteln oder kurzbauendes Verbinden vom Grundgerät und Sammelcontainer erzielt werden.

- 7 -                                    0255103

## Bezugsziffernverzeichnis

1    Grundrahmen

1a   Anhängedeichsel

1b   Dreipunktanschluß

1c   Zugmaul

1d   Gelenk

1e   Verstellzylinder für Bodenanpassung

2    Laufräder

3        "

4    Gestellaufbau

5    Häckslergehäuse

6    Häckselrotor

7    Auswurfkanal

8    verstellbares Leitblech

9    Zuführkanal

10   höhenbewegliche Dosier- bzw. Einzugswalze

10a  Gehäuse

11   Übersetzungsgetriebe

12   Zapfwellenanschluß

13   Gelenkwellendurchtrieb

14   Untersetzungsgetriebe

15   Knickgelenk am Rahmen

15a  Stellzylinder

16   Beschickungsvorrichtung

16a   Säule

16b   Greiferarme

16c        "

16d   Verstellzylinder

16e   Gabel, Rechenzinken oder Greifzange

16f   vertikale Schwenkachse

17    Anhängekupplung

18    Containerwagen

19    Steuerhebel für Beschickungsvorrichtung

20    Kompostumsetzer

20a   Fräs- und Schleuderrad

21    Gehäuse

22    Auswurfkanal

23    seitliche Leit- bzw. Einlaufbleche

24    Absiebvorrichtung

24a   Leitkanal

25    Förderband

26    Nachzerkleinerer

26a   rotierende Arbeitswerkzeuge

27    Siebkäfig

28    Förderschnecke

29    Antriebsmotor separat vom Hauptantrieb

30    Containerkupplung

F     Fahrtrichtung

S     Schwenkbereich von Pos. 16

M     Miete

E     Erdboden

Patentansprüche

1. Gerätekombination zum maschinellen Aufbereiten organischer Materialien wie z.B. Astholz, Gebüsch, Strauchwerk o.ä. Stoffen vornehmlich zum Zwecke der anschließenden Kompostierung und Erzeugung von Feinkomposterde,

g e k e n n z e i c h n e t   d u r c h

ein im Anhänge- oder anderen Verbundbetrieb mit einem Schlepper o.ä. Motorfahrzeug verfahrbares Zerkleinerungsgerät ( 5, 6 ) für das Rohmaterial mit zugeordneter, verstell- bzw. steuerbarer Beschickungsvorrichtung ( 16 )

und Zusatzelementen ( 17, 30 ) zum wahlweisen Ankuppeln bzw. Aufsatteln eines Sammelcontainers ( 18 ) für das Häckselgut und/oder eines Umsetzgerätes ( 20 ) zum Weiterbehandeln bereits in Mieten ( M ) gelagerten Kompostmaterials.

2. Gerätekombination nach Anspruch 1,

d a d u r c h   g e k e n n z e i c h n e t ,

daß die Arbeitswellen den höhenbeweglich am Häckselgehäuse ( 5 ) gelagerten Dosier- bzw. Einzugswalze ( 10 ) und des Häckselrotors ( 6 ) in Längs- bzw. Fahrtrichtung ( F ) des mit Laufrädern ( 2, 3 ) versehenen Grundrahmens ( 1 ) liegen, die Beschickungsvorrichtung als Drehkran ( 16 ) mit über hydraulische Zylinder-Kolbeneinheiten ( 16d ), verstellbaren Greiferarmen ( 16b, 16c ) und einendiger Greiferzange bzw. zinkenbesetzter Gabel ( 16e ) ausgebildet und über eine Säule ( 16a ) o.dgl. auf dem Gestellaufbau ( 4 ) befestigt ist.

3. Gerätekombination nach den Ansprüchen 1 und 2,

d a d u r c h   g e k e n n z e i c h n e t ,

daß den Gehäusen ( 5 bzw. 10a ) von Häckselrotor ( 6 )

und Einzugswalze ( 10 ) ein quer zur Fahrtrichtung ( F ) sowie im Schwenk- bzw. Arbeitsbereich ( S ) der Beschickungsvorrichtung ( 16 ) liegender, vorzugsweise trichterförmiger Zufuhrkanal ( 9 ) an einer der Gerätelängsseiten zugeordnet ist.

4. Gerätekombination nach den Ansprüchen 1 bis 3,

   d a d u r c h   g e k e n n z e i c h n e t ,                :

   daß dem Häckslergehäuse ( 5 ) in an sich bekannter Weise ein Auswurfkanal ( 7 ) mit an seinem freien Ende verstellbaren Leitblech ( 8 ) zugeordnet und der Grundrahmen ( 1 ) zusätzlich mit einer Anbaukupplung ( 17, 30 ) für einen Sammelcontainer bzw. ein ähnliches Fahrzeug ( 18 ) versehen ist.

                                                    ;

5. Gerätekombination nach den Ansprüchen 1 bis 4,

   g e k e n n z e i c h n e t   d u r c h

   Zuordnung eines Kompostumsetzers ( 20 ) für in Mieten ( M ) gelagertes, bereits vorzerkleinertes Material in anhäng- oder über Schnellverschlüsse aufsattelbarer Ausführung zum Grundrahmen ( 1 ).

6. Gerätekombination nach einem oder mehreren der vorhergehenden Ansprüche,

d a d u r c h   g e k e n n z e i c h n e t ,

daß der Umsetzer ( 20 ) in an sich bekannter Weise aus einem stirnseitig in Arbeitsrichtung ( F ) liegenden Fräs- oder Schleuderrad ( 20a ) mit seitlichen Leitblechen ( 23 ) besteht, das von einem Gehäuse ( 21 ) radial teilweise umgeben ist und an welches ( 21 ) ein quer zur Fahrtrichtung ( F ) liegender Auswurfkanal ( 22 ) anschließt.

7. Gerätekombination nach Anspruch 6,

d a d u r c h   g e k e n n z e i c h n e t ,

daß sich unterhalb des Auswurfkanals ( 22 ) eine schwingende o.ä. bewegte Absiebeinrichtung ( 24 ) anschließt mit seitlichen Leitblechen ( 24a ) zu einem Austragförderer ( 25 ) und Rückführung groben Materials zu einem in einem Siebkäfig ( 27 ) o.dgl. laufenden Nachzerkleinerer ( 26 ) mit rotierenden Arbeitswerkzeugen ( 26a ).

8. Gerätekombination nach einem oder mehreren der vorhergehenden Ansprüche,

d a d u r c h   g e k e n n z e i c h n e t ,

daß der Häckselrotor ( 6 ) des Grundgerätes und das Fräs- bzw. Schleuderrad ( 20a ) des Kompostumsetzers ( 20 ) von einem gemeinsamen Eingangsgetriebe ( 11 ) mit Zapfwellenanschluß ( 12 ) aus über einen Gelenkwellendurchtrieb ( 13 ) zum Schleuderradgetriebe ( 14 ) hin, antriebsseitig miteinander gekoppelt bzw. koppelbar sind.

9. Gerätekombination nach einem der Ansprüche 5 bis 8,

g e k e n n z e i c h n e t   d u r c h

Zuordnung einer Förderschnecke ( 28 ) an mindestens einem der seitlichen Leitbleche ( 23 ) des Umsetzgerätes ( 20 ).

10. Gerätekombination nach Anspruch 9,

d a d u r c h   g e k e n n z e i c h n e t ,

daß die Förderschnecke ( 28 ) einen separaten Antrieb ( 29 ) ( z.B. Ölmotor ) aufweist und beim Transport nach innen einschwenkbar ist.

11. Gerätekombination nach einem oder mehreren der vorhergehenden Ansprüche,

d a d u r c h   g e k e n n z e i c h n e t ,

daß durch Einbau entsprechender Leitkanäle der Häcksler ( 5, 6 ) selbst als Nachzerkleinerer für das beim Umsetzvorgang anfallende Grobgut schaltbar ist.

12. Gerätekombination nach einem oder mehreren der vorhergehenden Ansprüche,

g e k e n n z e i c h n e t   d u r c h

ein Knickgelenk ( 15 ) mit Stellzylinder ( 15a ) im Grundrahmen ( 1 ) zwischen Häcksler ( 5, 6 ) und Umsetzgerät ( 20 ).

Fig.1

Fig.2

Fig.3

Fig. 4

0255103

Fig. 5